Europäisches Patentamt

European Patent Office

Office européen des brevets

(11) Publication number: **0 202 881**
**A2**

(12) # EUROPEAN PATENT APPLICATION

(21) Application number: **86303738.8**

(22) Date of filing: **16.05.86**

(51) Int. Cl.⁴: **D 07 B 1/06**
**B 60 C 9/00**

(30) Priority: **17.05.85 US 735436**

(43) Date of publication of application:
**26.11.86 Bulletin 86/48**

(84) Designated Contracting States:
**AT BE CH DE FR GB IT LI LU NL SE**

(71) Applicant: **NATIONAL-STANDARD COMPANY**
**1618 Terminal Road**
**Niles Michigan 49120(US)**

(72) Inventor: **Rausch, Doyle W.**
**1114 Miami Road**
**Niles Michigan 49120(US)**

(74) Representative: **Newby, Martin John et al,**
**J.Y. & G.W. Johnson Furnival House 14-18 High Holborn**
**London WC1V 6DE(GB)**

(54) Reinforcement cord construction.

(57) Steel cords (10) for reinforcing elastomeric articles such as rubber belts and passenger tires is comprised of a plurality of steel wires (11-14) twisted about one another into a single geometrical closed array when placed in a helical position with respect to the cord longitudinal axis and possessing a lay length greater than about 15mm (0.60 inches).

FIG. 3

EP 0 202 881 A2

## Reinforcement cord construction

The present invention relates to a novel cord construction for reinforcing elastomeric articles and, more particularly, to a steel cord which is embedded within a rubber tire or belt assembly and which possesses a lay length of greater than about 15 mm (0.60 inches).

As is well known in the art, elastomeric articles, such as pneumatic tires and belts, are reinforced with metallic cord constructions comprised of a plurality of wire strands or cords possessing a pitch of the strand geometry or lay length of between about 10.2-14mm (0.40-0.55in). Such rubber reinforced tire constructions have resulted in millions of tires being manufactured. However, it has been found that when such pneumatic tires containing such a tire cord construction, having a lay length of 10.2 mm to about 14.0mm, is cut or punctured, the exposed cord rapidly deteriorates upon contact with corrosive liquids, such as a salt solution or water, entering the cut or puncture and wicking down the entire length of cord to destroy the tire assembly. It is believed that one reason for such existing prior art assemblies to rapidly deteriorate when exposed to corrosive liquids is that that the short lay construction, between 10.2mm to 14.0mm, inhibits rubber penetration about the individual filaments of the twisted cord construction during the vulcanization of the tire assembly thereby resulting in voids within the cured tire cord rubber assembly which facilitates wicking and deterioration of the bond between the tire cord and the rubber tire assembly by such solutions.

More recently, in U.S. Patent 4,022,009 it has been suggested that a metallic cable comprised of a plurality of core filaments linearly positioned adjacent one another and having a wire wrapping therearound, when embedded within a rubber assembly, results in an assembly possessing an increased resistance to corrosion or deterioration from salt solutions because of the increased rubber adhesion to the metal cable reinforcing member.

However, the production of such a cord is complex and expensive.

Additionally, in the May, 1980, Elastomerics publication, at pages 64-65, an open cord construction is described which is comprised of a plurality of individual wires loosely associated with respect to each other and movable with respect to each other, with air spaces therebetween. Such open cord constructions possess a lay length of up to about 16mm (.63in). Such open cord constructions purportedly result in improved rubber penetration about the cord thereby reducing the potential for corrosive liquids, such as a salt solution, to wick through the length of the cord when a cut or puncture exposes the steel cord construction. However, such open constructions result in a reinforcement cord which possesses an unacceptable low load elongation that occurs at a fraction of the breaking load for the tire cord and such open constructions require complex and expensive machinery for their manufacture. Accordingly, such constructions have enjoyed only limited acceptance in the market place.

It is one object of the present invention to provide a novel reinforcing steel cord construction for use as a reinforcement for an elastomeric article wherein the steel cord construction comprises a plurality of wires twisted about one another and possessing a long lay length greater than about 15mm (0.60 inches). Another object of the present invention is to provide a novel steel cord assembly for use as a reinforcement for a passenger tire wherein the steel cord comprises a plurality of wires twisted about one another and possessing a lay length greater than about 15mm (0.60in). It is still another object of the present invention to provide a novel steel cord reinforcement for use as a reinforcement for a truck tire wherein the steel cord is comprised of a plurality of wires twisted about one another and possessing a lay length greater than about 15 mm (0.60 in.).

Still another object of the present invention is to provide a novel steel cord construction consisting of a single geometrical closed array having a low load elongation for reinforcing a pneumatic tire, timing belts, V belts, hose and the like.

Still another object of the present invention is to provide a longer lay reinforcing steel cord construction which provides improved rubber penetration about the individual filaments and eliminates voids within the interior of the steel cord construction after vulcanization of the elastomeric material.

Still another object of the present invention is to provide an improved reinforcing steel construction for elastomeric articles which eliminates the ability of corrosive liquids to travel or wick through the length of the cord upon exposure of the cord constructions to corrosive liquids.

Still another object of the present invention is to provide a manufacturing cost advantage in producing a steel cord reinforcing construction over existing steel cord reinforcing materials.

Other objects of the present invention will become apparent from the foregoing description and the attached drawings.

FIG. 1 is a short lay four filament cord construction in accordance with the prior art;

FIG. 2 is a cross-sectional view taken along lines 2-2 of FIG. 1;

FIG. 3 is a longitudinal view of the steel cord reinforcing construction in accordance with the present invention; and

FIG. 4 is a cross-sectional view taken along lines 4-4 of FIG. 3.

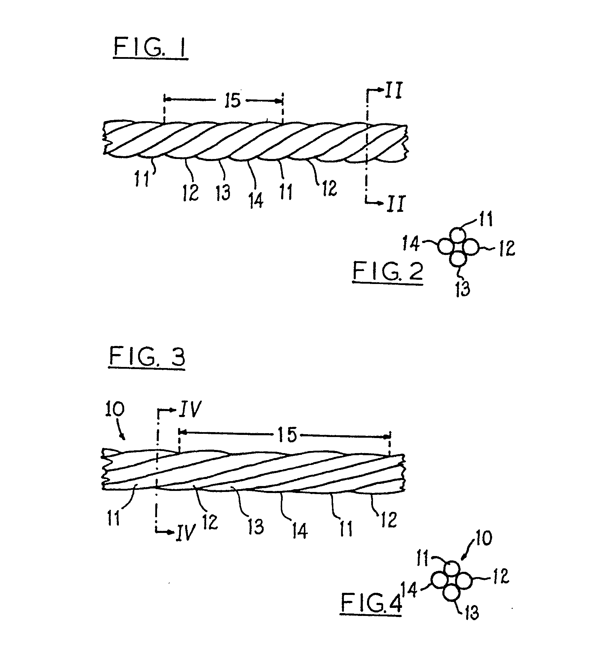

Now referring to the drawings wherein like numerals have been used throughout the several views to designate the same or similar parts, in FIG. 3 there is illustrated a steel cord construction 10 in accordance with the present invention wherein a plurality of wires 11, 12, 13 and 14 are twisted about one another to form a cord construction possessing a lay length 15 of greater than about 15 mm (0.60 in.). The lay length 15 is the length over which the cord repeats itself or is otherwise known as the periodicity of the twisted cord, as shown in FIGS. 1 and 3.

As represented in FIGS. 3 and 4, the long lay cord construction 10 in accordance with the present invention represents a structure for use in reinforcing an elastomeric article, such as a passenger tire having a lay length greater than about 15mm (.60in).When the novel long lay cord construction in accordance with the present invention is used as a reinforcing cord construction for a truck tire, it has been found that the range of lay length greater than about 15 mm provides the desired prevention of wicking and satisfactory low load elongation. FIG. 4 represents an end view or cross-section normal to the cord axis of the long lay cord construction 10, as shown in FIG. 3, and FIG. 2 is an end view or cross-section normal to the cord axis of a prior art short lay cord, as shown in FIG. 1. As will be noted, the FIGS. 2 and 4 appear to be identical because only the length of the lay is different within the cord construction and the geometrical form is closed. The plurality of wires 11, 12, 13 and 14 are twisted/wound about one another to form a single geometrical closed array when the wires are twisted/wound into a helical position with respect to the longitudinal axis or centerline of the cord construction 10. Accordingly, because a cord is composed of several grooves having a helical path, the lay length 15 for a four-filament cord, as represented in FIGS. 1 and 3, is

-5-

the length over which the cord repeats itself or is the periodicity of cord construction.

Table I summarizes various test results of five tire cord constructions comprised of 4 X 0.25 mm steel wires.

TABLE I    4 X 0.25 mm Constructions

| Cord | Lay Length (mm) | Low Load Elongation (percentages) | Air Permeability (Std. Liters Per Min.) | Adhesion Block Test (percentage rubber covered) | Salt Corrosion Visual |
|------|------|------|------|------|------|
| A | 10.10 | 0.0560 | 0.0313 | 65 | Large |
| B | 12.60 | 0.0445 | 0.0405 | 85 | Large |
| C | 15.62 | 0.0435 | 0.0155 | 90 | Trace |
| D | 16.84 | 0.0490 | 0 | 90 | None |
| E | 22.58 | 0.0465 | 0 | 90 | None |

The cord diameter for cords A and B was 0.660mm (0.0260in), cord C 0.658mm (0.0259in), cord D 0.654mm (0.02575in) and cord E 0.648mm (0.0255in). The ratio of lay length divided by the cord diameter were, respectively for cords A-E, 15.3, 19.1, 23.7, 25.7 and 34.9. Of the five samples, the lay lengths varied from 10.10mm (0.398in) for cord A, to 22.58mm (.889in) for cord E, and the low load elongation or the elongation that occurs at a small fraction of the braking load of the cord construction were satisfactory because they were less than the acceptable maximum of about 0.06 per cent. The low load elongation varied from 0.056 to 0.0435. The air permeability (standard liters per minute) for cords A and B were 0.0313 and 0.0405 and for cord C was 0.0155.

The low load elongation was measured by determining the difference in elongation of the cord at 1.63 kg (3.6 lbs.) and 0.27 kg (0.6 lbs.) divided by the gauge length of the cord. As known in the art, low load elongation is an increment of elongation corresponding to an increment of tensile load divided by the fuage length such load increment occurring at a relative load level compared to the cord breaking load.

The air permeability was measured by curing the tire cord construction 10 within a 50.8 mm (2 in) block of rubber compound and subjecting the sample to a regulated air pressure of 68.95 kPa (10 lbs/in ) at one end of the two inch cord extending outside the block of rubber and by means of a flowmeter the flow rate of air through the cord that is cured in the rubber is obtained at the other end extending outwardly from the block of rubber. The cured tire cord rubber compound was molded as a modification of ATSM D2229 rubber mold, is known in the art. The adhesion block test precentage varied from 65% and 85% for cords A and B to 90% for cords C-E.

The salt corrosion was visually observed by placing the tire cord construction in the cured rubber in a container of a 10% salt solution for 10 days. After the 10 day period, the test piece was examined for salt penetration on the open end exposed to the air. The visual salt corrosion was determined to be large for cords A and B, with a trace of corrosion in cord C with D and E exhibiting no visible salt corrosion.

From Table I, it is observed that longer lay length cord constructions C,D and E of approximately 15.62 mm (0.615 in.) to 22.58 mm (0.889 in.) exhibited improved rubber penetration which permitted and resulted in improved rubber coverage of the individual filaments within the cord construction thereby reducing the potential for voids within the center of the cords. It is believed these properties reduce the ability of corrosive liquids to travel or wick through the length of the cord, as evidenced by the trace and absence of visible corrosion in cord C, D and E. Also, any damage or deterioration to a steel cord construction embedded within the cured rubber caused by corrosive liquids, such as salt or water, entering the tire through a cut or puncture is limited to the immediate area of the cut or puncture and that the ability of corrosive liquids to travel or wick through the length of the cord embedded in the rubber is substantially minimized and eliminated. The test results further established that steel cord contructions possessing a lay length of about 15 mm (0.60 in.) or shorter lay length for a .25 mm diameter wire filament permits large amounts of salt solution to wick the entire length of the cord when a sample is exposed to a 10% salt solution. On the other hand, when a steel cord construction possessing approximately about a lay length of greater than about 15 mm (0.60 in.) for such a sized wire filament exhibit no evidence of wicking or visual salt corrosion and that air permeability measurements on the cured cords C, D and E indicate no detectable air flow through such cord constructions. Thus, it has been found that the longer lay lengths steel cord constructions embedded within a rubber material will substantially reduce the deterioration of the steel cord when a cut or puncture subjects the steel cord to corrosive liquids by retarding the flow of these liquids through the cord.

The present invention relates to the concept that by increasing the pitch or lay length of the strand geometry during twisting for a given wire strand diameter increases the mobility of the strand filaments relative to each other during vulcanization and curing within the rubber substrate material. The word "twisting" is meant to include laying, stranding, bunching or any means by which the wire filaments are placed into a helical positoin or relationship with respect to the axial centerline of the cord. The present invention has preferred applicability in the case of 3 to 5 single geometrical closed steel cords arrays commonly used in passenger and truck tire reinforcement. Although the data has been given for a four wire cord single geometrical array, the presnt invention has applicability to any plurality of wires twisted into cable or strand form and providing a single geometrical closed array provided the desired reinforced cured elastomeric article is obtained.

Although the invention has been described in detail for the purpose of illustration, it is to be understood that such detail is solely for that purpose and that changes and modifications can be made by those skilled in the art without departing from the spirit and scope of the present invention.

CLAIMS

1. A steel cord (10) for use as a reinforcement for an elastomeric article, said steel cord comprising a plurality of wires (11-14) twisted/wound about one another, said plurality of wires consisting of a single geometrical closed array when said plurality of wires are placed into a helical position with respect to the axis of said cord, characterised in that said steel cord possesses a lay length greater than about 15mm (0.60 in).

2. A steel cord (10) for use as a reinforcement for an elastomeric article, said steel cord comprising between three to five wires (11-24) twisted/wound about one another, said plurality of wires consisting of a single geometrical closed array when said plurality of wires are placed into a helical position with respect to the axis of said cord, characterised in that the ratio of the lay length divided by the cord diameter is greater than about 23.

3. A steel cord according to claim 1 or 2, characterised in that said steel cord is brass coated.

4. A steel cord according to any of claims 1 to 3, characterised in that said steel cord possesses a low load elongation of less than about 0.06 per cent.

5. A steel cord according to any of the preceding claims, characterised in that said steel cord includes an external filamentary wrapping therearound.

6. A steel cord according to any of the preceding claims, characterised in that said steel cord is comprised of four wires and in that the ratio of said lay length to the cord diameter is between about 23 to 50.

7. A steel cord according to any of claims 1 to 5, characterised in that said steel cord is comprised of five wires and in that the ratio of said lay length to the cord diameter is between about 23 to 50.

8. A steel cord according to any of claims 1 to 5, characterised in that said steel cord is comprised of three wires and in that the ratio of said lay length to the cord diameter is between about 23 to 50.

9. An elastomeric article reinforced with steel cord according to any of the preceding claims.

10. An elastomeric article according to claim 9, consisting of a passenger tire, truck tire, drive belt or rubber hose.

FIG. 1

FIG. 2

FIG. 3

FIG. 4